Europäisches Patentamt

European Patent Office

Office européen des brevets

(19)

(11) Veröffentlichungsnummer: **0 254 231 B1**

(12) **EUROPÄISCHE PATENTSCHRIFT**

(45) Veröffentlichungstag der Patentschrift: 29.05.91

(51) Int. Cl.5: **H04B 10/06**

(21) Anmeldenummer: 87110409.7

(22) Anmeldetag: 17.07.87

(54) Optischer Überlagerungsempfänger für insbesondere phasensprungmoduliertes Licht.

(30) Priorität: 21.07.86 DE 3624601
10.07.87 DE 3722936

(43) Veröffentlichungstag der Anmeldung:
27.01.88 Patentblatt 88/04

(45) Bekanntmachung des Hinweises auf die
Patenterteilung:
29.05.91 Patentblatt 91/22

(84) Benannte Vertragsstaaten:
AT BE CH DE ES FR GB GR IT LI NL SE

(56) Entgegenhaltungen:
EP-A- 0 194 786

FIRST INTERNATIONAL CONFERENCE ON
OPTICAL FIBRE SENSORS, London, 26.-28.
April 1983, Seiten 48-52, IEEE, London, GB; A.
DANDRIDGE et al.: "Fiber optic interferometric sensor development at NRL"

JOURNAL OF LIGHTWAVE TECHNOLOGY,
Band LT-3, Nr. 5, Oktober 1985, Seiten
1110-1122, IEEE, New York, US; G.L. ABBAS
et al.: "A dual-detector optical heterodyne
receiver for local oscillator noise suppression"

ELECTRONICS LETTERS, Band 22, Nr. 1, 2.
Januar 1986, Seiten 9-11, Stevenage, Herts,
GB; A.W. DAVIS et al.: "Coherent optical
receiver for 680 Mbit/s using phase diversity"

JOURNAL OF LIGHTWAVE TECHNOLOGY,
Band LT-4, Nr. 2, Februar 1986, Seiten
182-195, IEEE, New York, US; L.G. KAZOVSKY:
"Balanced phase-locked loops for optical
homodyne receivers: performance analysis,
design considerations, and laser linewidth
requirements"

ELECTRONICS LETTERS, Band 21, Nr. 19, 12.
September 1985, Seiten 867-868, Stevenage,
Herts, GB; T.G. HODGKINSON et al.:
"Demodulation of optical DPSK using inphase and quadrature detection"

(73) Patentinhaber: Siemens Aktiengesellschaft
Wittelsbacherplatz 2
W-8000 München 2(DE)

(72) Erfinder: Pietzsch, Joachim, Dr.-Ing.
Waakirchner Strasse 34
W-8000 München 70(DE)

## Beschreibung

Die Erfindung betrifft einen optischen Überlagerungsempfänger entsprechend dem Oberbegriff des Anspruchs 1.

Optische Überlagerungsempfänger sind aus Journal of Lightwave Technology Vol. LT-3, Nr. 5 vom Oktober 1985 Seiten 1110 bis 1122 und Nr. 6 vom Dezember 1985, Seiten 1238 bis 1247 und aus Electronics Letters vom 12. Sept. 85, Vol. 21, No. 19, S. 867 und 868 bekannt. In der zweiten Veröffentlichung wird unter Verwendung einer gegebenenfalls modifizierten "Costas-Schleife" ein optischer Überlagerungsempfänger aufgebaut, der eigentlich aus zwei Empfängerzweigen besteht. Im ersten Empfängerzweig werden Empfangssignal und Lokaloszillatorsignal in herkömmlicher Weise gemischt, im zweiten Empfängerzweig, erfährt das Lokaloszillatorsignal vor der Mischung eine 90°-Phasendrehung. In diesem Fall werden optische Richtkoppler benötigt, die als optische Hybride bezeichnet werden. Als 90° Hybrid bezeichnet man einen Richtkoppler, an dessen beiden Ausgängen die überlagerten Lichtwellen des Signals und des lokalen Lasers auftreten. Eines der Ausgangssignale des 90° Hybrids enthält dabei eine Komponente mit einer zusätzlichen 90° Phasendrehung. Entsprechend der ersten Veröffentlichung kann durch die Verwendung eines BalanceEmpfängers der Einfluß des Laserintensitätsrauschens eliminiert werden. In der dritten Veröffentlichung wird auf eine phasenstarre Synchronisation des lokalen Lasers verzichtet, jedoch ebenfalls ein 90° Hybrid eingesetzt, dessen beide Ausgangssignale nach der Umwandlung in Fotoströme getrennt demoduliert und anschließend summiert werden. Es wird dabei differentielle Phasenumtastung (DPSK) verwendet.

Aus dem Journal of Lightwave Technology, Band LT-4, Nr. 2, Februar 1986, Seiten 182-195 ist ein optischer Überlagerungsempfänger nach dem Homodynprinzip für insbesondere PSK-moduliertes Licht mit einem eingangsseitig an eine Empfangslichtquelle und einen lokalen Laser angeschlossenen optischen 90° Hybrid, dessen Ausgänge mit optoelektronischen Detektoren verbunden sind, bekannt.

Aus AEÜ, Band 37 (1983), Heft 5/6, Seiten 203 bis 206 ist die Realisierung von 90°- und 180°-Hybridverzweigungen für optische Signale mit Wellenlängen von etwa 10 μm bekannt. Die bekannten 90°- und 180°-Hybride sind dabei mittels diskreter optischer Elemente realisiert, so daß sich ein insgesamt sehr aufwendiger Aufbau ergibt. Aus der eingangs erwähnten zweiten Veröffentlichung ist weiterhin ein Vorschlag für einen 90°- oder 180°-Hybrid in integrierter Optik bekannt, bei dem der Lichtweg auf einem Lithiumniobat-Substrat aufgebaut ist.

Aus dem Vortrag TUB5 von D. W. Stowe auf der Optical Fiber Conference, New Orleans 1983, ist es bereits bekannt, einen optischen 90°-Hybrid durch die Verkopplung von vier 2 x 2-Kopplern zu realisieren, die Ansprüche an die Kontrolle der optischen Weglänge zwischen den Kopplern sind jedoch extrem hoch.

Aus den Arbeiten von R. G. Priest, IEEE Journal of Quantum Electronics, Bd QE-18 (1982), Seiten 1601-1603, von K. P. Koo, A. B. Tveten und A. Dandridge in Appl. Phys. Lett. 41 (7) vom 1 October 1982, Seiten 616-618 und von A. Dandridge et al in Internat. Conference on Optical Fibre Sensors, London 1983, Seiten 48-52 zur Sensortechnik und insbesondere zum Faserinterferometer sind aus einem 3 x 3-Faserkoppler mit angeschlossenem Fotodioden bestehende 90°-Hybride bekannt. Zur Realisierung des 90°-Hybrides wird ein symmetrischer 3 x 3-Koppler mit jeweils 120° Phasenverschiebung zwischen den Ausgängen verwendet. Bei der theoretischen Ableitung des Prinzips durch R. G. Priest wird von einem idealen, verlustfreien Koppler ausgegangen.

Die Aufgabe bei der vorliegenden Erfindung besteht darin, einen optischen Empfänger der eingangs erwähnten Art zu entwickeln, der bei geringem Aufwand in der optischen Nachrichtenübertragung mit Lichtwellenleitern einsetzbar ist, ohne daß die verwendeten Koppler verlustfrei und symmetrisch sein müssen.

Erfindungsgemäß wird die Aufgabe durch einen optischen Überlagerungsempfänger der eingangs erwähnten Art gelöst, der durch die Merkmale des Patentanspruchs 1 gekennzeichnet ist.

Im Gegensatz zu den bekannten 90°-Hybriden aus symmetrischen 3 x 3-Faserkopplern ermöglicht die Erfindung in vorteilhafter Weise die Verwendung teilsymmetrischer 3 x 3-Faserkoppler, die beim Homodynempfang die Empfängerempfindlichkeit steigern.

Durch die Differenzbildung der aus den optischen Signalen erzeugten elektrischen Signale werden in vorteilhafter Weise die Gleichanteile und das Laserintensitätsrauschen unterdrückt, da die Gleichanteile gleiches Vorzeichen, die bei Phasendifferenz oder Phasenmodulation übertragenen Nutzsignale aber entgegengesetzte Vorzeichen aufweisen.

Die Erfindung wird im folgenden anhand eines in der Zeichnung dargestellten optischen Homodynempfängers für PSK-modulierte Signal als Ausführungsbeispiel näher erläutert.

In der Zeichnung zeigt

Fig. 1  die Prinzipschaltung eines optischen Homodynempfängers,

Fig. 2    eine detaillierte Darstellung des Eingangsteils des Homodynempfängers nach Fig. 1,

Fig. 3    ein verbessertes Empfangsteil für den Homodynempfänger nach Fig. 1 und

Fig. 4    die detaillierte Darstellung der elektronischen Schaltung des Empfangsteils nach Fig. 3.

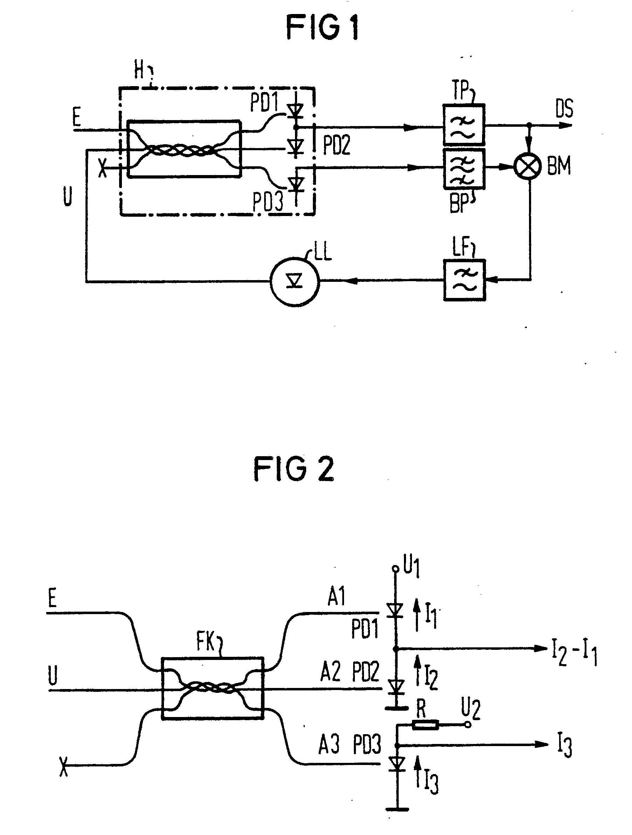

Der in der Fig. 1 dargestellte optische Homodynempfänger enthält empfangsseitig einen $90°$ Hybrid H, dessen einer Eingang E mit einer Quelle für das Empfangssignal, also beispielsweise mit einem optische Nachrichtensignale führenden ersten Lichtwellenleiter und dessen anderer Eingang U über einen weiteren Lichtwellenleiter mit einem lokalen Laser LL verbunden ist. Beim optischen $90°$ Hybrid handelt es sich um einen handelsüblichen Dreifach-Faserkoppler mit drei symmetrischen Ein- und Ausgängen. Der erste Eingang des Faserkopplers ist gleichzeitig der Eingang E für das Nutzsignal und der zweite Eingang derjenige für das Licht des lokalen Lasers, der dritte Eingang bleibt unbeschaltet. Die Ausgänge des Faserkopplers sind jeweils getrennt mit einem fotoelektrischen Wandler PD1, PD2, PD3 verbunden, bei denen es sich um handelsübliche Fotodioden handelt. Durch den symmetrischen Faserkoppler ergibt sich eine gleichmäßige Leistungsaufteilung mit jeweils etwa 33 % Koppelgrad, bei wenigstens annähernd verlustfreiem Koppler sind die von den drei Fotodioden PD1, PD2, PD3 erzeugten Fotoströme jeweils um $120°$ zueinander phasenverschoben. Aus der Differenz der Fotoströme der zweiten und der ersten Fotodiode ergibt sich unter der Voraussetzung eines phasensprungmodulierten Empfangssignals bei phasenrichtiger Kopplung des lokalen Lasers wiederum das ursprüngliche Datensignal, das nach Durchlaufen eines Tiefpasses TP zur Unterdrückung von Störsignalen an einem Ausgangsanschluß zur Verfügung steht. Das Datensignal ist orthogonal zum Wechselanteil des dritten Fotostroms und gestattet damit die Realisierung einer Costas-Schleife. Der von der dritten Fotodiode erzeugte Fotostrom $I_3$ durchläuft zur Unterdrückung von Störsignalen und des Gleichanteils einen Bandpaß BP und wird einem Balancemischer BM zugeführt. Ein weiterer Eingangsanschluß dieses Mischers ist mit dem Ausgangsanschluß für das Datensignal DS verbunden, im Mischer wird das Produkt zwischen dem gegebenenfalls verstärkten Fotostrom der dritten Fotodiode PD3 und dem Datensignal DS gebildet. Dieses phasenverschobene Signal wird über ein Schleifenfilter LF dem Steuereingang eines lokalen Lasers LL zugeführt, bei dem es sich um eine einmodige und besonders schmalbandige Laserdiode handelt, wie sie beispielsweise in Electronics Letters, 19, 1984, Nr. 3, S. 938 bis 940 beschrieben wird.

In der gesonderten Darstellung des Empfangsteils des optischen Empfängers entsprechend Fig. 2 sind mit E und U wiederum die Anschlüsse für das empfangene Licht und das vom Laser erzeugte Licht des Dreifach-Faserkopplers FK bezeichnet. Die symmetrischen Ausgängen A1, A2, A3 sind wie in Fig. 1 mit zugeordneten Fotodioden PD1, PD2, PD3 verbunden, die erste und die zweite Fotodiode PD1, PD2 sind dabei in Serie geschaltet und über die Anode der ersten Fotodiode PD1 mit einer Quelle für eine erste Sperrspannung $U_1$ und über die Katode der zweiten Diode PD2 mit Bezugsspannung verbunden. Entsprechend ist die Anode der dritten Fotodiode über einen Widerstand R mit einer Quelle für eine zweite Sperrspannung $U_2$ und die Katode dieser dritten Fotodiode mit Bezugspotential verbunden. Zwischen der ersten und der zweiten Fotodiode PD1, PD2 wird über einen Anschluß die Differenz der Fotoströme $I_2$, $I_1$ beider Dioden abgegriffen. Diese Differenz dient nach Durchlaufen des Tiefpaßfilters TP entsprechend Fig. 1 als Datensignal DS und wird außerdem über einen Eingangsanschluß dem Balance-Mischer BM zugeführt. Die Fotoströme $I_1$, $I_2$, $I_3$ ergeben sich aus der Lichtleistung $U_0^2$ des Lokaloszillators und der Lichtleistung $E_0^2$ der Empfangslichtquelle unter der Annahme eines Konversionsfaktors K von Lichtleistung in Fotostrom für die verwendeten Fotodioden, wobei die Feldamplituden am Eingang des Dreifachkopplers für das Empfangslicht

$$E = \sqrt{2} \times E_0 \times \cos(\omega t + \phi_1)$$

und für das Licht des Lokaloszillators

$$U = \sqrt{2} \times U_0 \times \cos(\omega t + \phi_2)$$

sind, wobei $\omega$ die optische Kreisfrequenz und $\phi1$, $\phi2$, die Phasenlage des jeweiligen Lichts bezeichnen.

Die Fotoströme $I_1$, $I_2$, $I_3$ sowie die Differenz der Fotoströme der zweiten und der ersten Fotodiode ergeben sich dann zu

$$I_1 = \tfrac{K}{3} \{E_0^2 + U_0^2 + 2 E_0 U_0 \cos(\phi_1 - \phi_2 + \varnothing)\}$$
$$I_2 = \tfrac{K}{3} \{E_0^2 + U_0^2 + 2 E_0 U_0 \cos(\phi_1 - \phi_2 - \varnothing)\}$$
$$I_3 = \tfrac{K}{3} \{E_0^2 + U_0^2 + 2 E_0 U_0 \cos(\phi_1 - \phi_2)\}$$
$$I_2 - I_1 = 4/3\, K \times \sin\varnothing\, E_0 U_0 \sin(\phi_1 - \phi_2)$$

Für den symmetrischen Dreifachkoppler beträgt die Phasendrehung $\varnothing = 120°$. Bei der einfachen Lösung des Eingangsteils entsprechend Fig. 2 ergibt sich ein störender Gleichanteil im Fotostrom $I_3$.

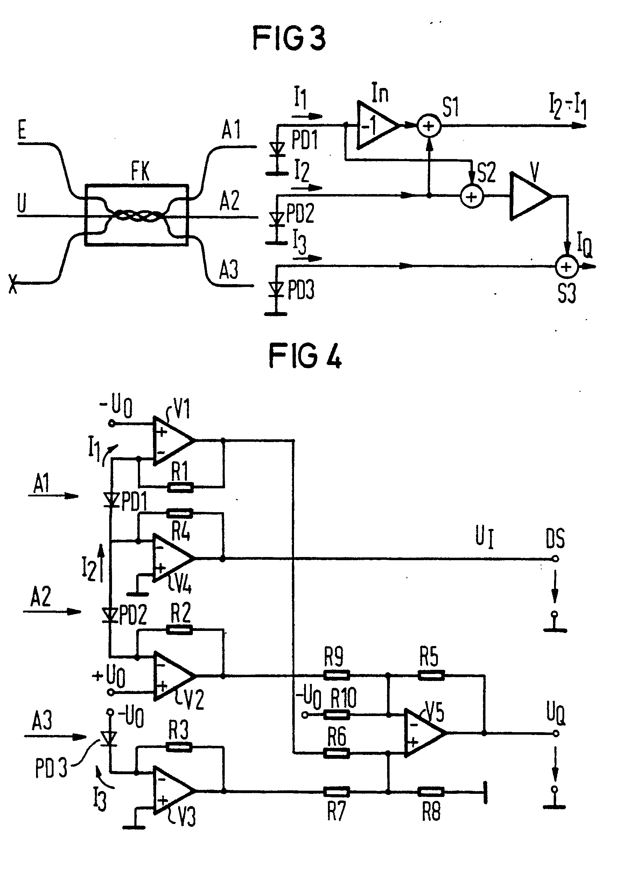

In der Fig. 3 ist die Prinzipschaltung eines Empfangsteils eines optischen Homodynempfängers für phasensprungmodulierte Signale dargestellt, bei dem anstatt des Fotostroms $I_3$ der dritten Fotodiode ein gleichstromfreies Quadratursignal $I_Q$ gebildet wird. Der Faserkoppler FK entspricht hinsichtlich Beschaltung seiner Ein- und Ausgangsanschlüsse dem der Fig. 2, er ist jedoch als teilsymmetrischer Koppler ausgebildet. Bei einem derartigen wenigstens annähernd teilsymmetrischen Dreifach-Faserkoppler sind die mit der ersten und der zweiten Fotodiode verbundenen Ausgänge annähernd gleichmäßig mit dessen beiden Eingängen für das Empfangslicht und das Licht des lokalen Lasers verkoppelt. Der dritte Eingang ist auch in diesem Falle nicht beschaltet, der mit der dritten Fotodiode verbundene Ausgang des Dreifach-Faserkopplers weist eine gegenüber beiden anderen Ausgängen unterschiedliche Kopplung auf. Der Ausgang des ersten fotoelektrischen Detektors PD1 ist in diesem Falle über einen Inverter In mit dem einen Eingang eines ersten Summierers S1 sowie direkt mit einem Eingang eines zweiten Summierers S2 verbunden. Entsprechend ist der Ausgang des zweiten fotoelektrischen Detektors PD2 mit den zweiten Eingängen des ersten und des zweiten Summierers S1, S2 direkt verbunden. Am Ausgang des ersten Summierers S2 steht wiederum das Differenzsignal $I_2$-$I_1$ zur Verfügung. Der Ausgang des zweiten Summierers S2 ist über einen Verstärker V mit dem einen Eingang eines dritten Summierers S3 verbunden, dessen anderer Eingang mit dem Ausgang des dritten fotoelektrischen Wandlers PD3 verbunden ist. Der Verstärker V ist als invertierender Verstärker mit einem, dem Verhältnis aus Koppelfaktor für den Ausgang A3 zur Summe der Koppelfaktoren für die Ausgänge A1 und A2 entsprechenden Verstärkungsfaktor ausgebildet. Am Ausgang des dritten Summierers S3 wird der Quadraturstrom $I_Q$ abgegeben, der um 90° gegenüber dem Differenzstrom $I_2$-$I_1$ phasenverschoben ist. Mit dem gleichstromfreien Quadraturstrom nach Fig. 3 ergibt sich nach Multiplikation im Balance-Mischer BM der Fig. 1 auch ein von der Datenmodulation befreites Stellsignal für den lokalen Laser LL. Die Gleichstromfreiheit entsteht dadurch, daß die Gleichanteile der drei Fotoströme $I_1$, $I_2$, $I_3$ gleiches Vorzeichen aufweisen, während die Phasensprungsignale abhängig von den Koppelfaktoren des Faserkopplers phasenverschoben sind.

In der Fig. 4 ist der elektronische Schaltungsteil des Empfangsteils nach Fig. 3 detaillierter dargestellt. Die Schaltung enthält die in der Praxis notwendigen Fotostromverstärker, die mittels Operationsverstärkern realisiert sind. Dabei sind der erste bis vierte Verstärker V1, V2, V3, V4 als Transimpedanzverstärker und der fünfte Verstärker V5, als Summierverstärker ausgebildet. Als fotoelektrische Wandler wurden PIN-Fotodioden verwendet.

Mit dem ersten Ausgangsanschluß A1 des Faserkopplers FK ist optisch die erste PIN-Fotodiode PD1 gekoppelt, deren Anodenanschluß mit dem invertierenden Eingang des ersten Operationsverstärkers V1 verbunden ist. Der nichtinvertierende Eingang dieses Operationsverstärkers ist mit einer Quelle für eine erste Sperrspannung -$U_0$ verbunden, außerdem ist dieser Operationsverstärker von seinem Ausgang über einen ersten Widerstand R1 zum invertierenden Eingang gegengekoppelt. Der Katodenanschluß der ersten PIN-Fotodiode PD1 ist mit dem Anodenanschluß der zweiten PIN-Fotodiode PD2 verbunden, die optisch an den zweiten Ausgang A2 des Faserkopplers FK angekoppelt ist. Der Katodenanschluß der zweiten PIN-Diode PD2 ist mit dem invertierenden Eingang eines zweiten Operationsverstärkers V2 verbunden, dessen nichtinvertierender Eingang mit einer Quelle für eine zweite Sperrspannung +$U_0$ und dessen Ausgang über einen zweiten Widerstand R2 mit dem invertierenden Eingang des zweiten Operationsverstärkers verbunden ist. Mit dem dritten Ausgang A3 des Faserkopplers FK ist optisch eine dritte PIN-Diode PD3 verbunden, deren Anodenanschluß mit einer Quelle für die negative Sperrspannung -$U_0$ und deren Katodenanschluß mit dem invertierenden Eingang eines dritten Operationsverstärkers V3 verbunden ist. Der nichtinvertierende Eingang dieses Operationsverstärkers V3 ist mit Bezugspotential verbunden, über einen dritten Widerstand R3 sind der Ausgang und der invertierende Eingang dieses Verstärkers miteinander verbunden. Die PIN-Fotodioden PD1, PD2 sind antiparallel miteinander verbunden, so daß am Verbindungspunkt der Katode der ersten PIN-Diode PD1 und der Anode der zweiten PIN-Fotodiode PD2 ein Differenzstrom fließt, der vom invertierenden Eingang eines vierten Operationsverstärkers V4 aufgenommen wird. Der nichtinvertierende Eingang dieses Verstärkers ist mit Bezugspotential verbunden, über einen vierten Widerstand R4 erfolgt eine Rückkopplung vom Ausgang dieses Verstärkers auf dessen invertierenden Eingang.

Über die Rück- bzw. Gegenkopplungswiderstände R1...R4 kann die Verstärkung der Operationsverstärker individuell eingestellt und dadurch Unsymmetrien des Faserkopplers FK hinsichtlich Leistungsaufteilung oder Phasendrehung und Unsymmetrien der Kennlinien bzw. Wirkungsgrade der Fotodioden ausgeglichen werden. Durch den vierten Operationsverstärker V4 wird aus dem Differenzstrom $I_2$-$I_1$ der zweiten und der ersten PIN-Fotodiode PD2, PD1 eine Differenzspannung $U_I$ erzeugt, die als Datensignal DS an einem Datenausgang zur Weiterverarbeitung ansteht. Im Ausführungsbeispiel wird von einem annähernd verlustfreien teilsymmetrischen Dreifach-Faserkoppler mit einer Leistungsaufteilung T1 = T2 von z.B. 45 % für die Ausgänge A1 und A2 und T3 von z.B. 10 % für den Ausgang A3 ausgegangen. Die Widerstände R1 und R2 haben dann den gleichen Wert, der Widerstand R3 hat den mit dem Teilerverhältnis

$$\frac{T1 + T2}{2 \, T \, 3}$$

multiplizierten Wert des Widerstandes R1.

Zur Erzeugung eines Nachstellsignals für den lokalen Laser sind die Ausgangssignale der drei PIN-Dioden PD1, PD2, PD3 miteinander zu verknüpfen. Diesen Zweck dient ein fünfter Operationsverstärker V5, der ebenfalls eine Rückkopplung von seinem Ausgang über einen fünften Widerstand R5 zu seinem invertierenden Eingang aufweist. Der Ausgang des ersten Operationsverstärkers ist über einen sechsten Widerstand R6 mit dem nichtinvertierenden Eingang des fünften Operationsverstärkers V5 verbunden, dieser nichtinvertierende Eingang ist außerdem über einen siebenten Widerstand R7 mit dem Ausgangsanschluß des dritten Operationsverstärkers V3 sowie über einen achten Widerstand R8 mit Bezugspotential verbunden. Weiterhin ist der Ausgangsanschluß des zweiten Operationsverstärkers V2 über einen neunten Widerstand R9 mit dem invertierenden Eingang des fünften Operationsverstärkers V5 verbunden, außerdem ist dieser Eingang über einen zehnten Widerstand R10 an eine Quelle für die negative Sperrspannung -U₀ angeschlossen. Am Ausgang des fünften Operationsverstärkers V5 ist das Quadratursignal $U_Q$ entnehmbar, aus dem durch Multiplikation mit dem Datensignal DS das Nachstellsignal für den lokalen Laser erzeugt wird.

Der sechste bzw. der siebte Widerstand R6, R7 bildet mit dem achten Widerstand R8 sowie der neunte bzw. der zehnte Widerstand R9, R10 bildet mit dem Widerstand R5 jeweils einen Spannungsteiler. Durch diese Spannungsteiler wird der Anteil der Ausgangsspannungen des ersten bis dritten Verstärkers V1, V2, V3 an der Eingangsspannung des fünften Verstärkers V5 eingestellt. Beim Ausführungsbeispiel weist aufgrund des gewählten Wertes für den dritten Widerstand R3 der neunte Widerstand R9 den gleichen und der zehnte Widerstand R10 den doppelten Widerstandswert des Widerstandes R5 auf, entsprechend weist der sechste Widerstand R6 den gleichen und der siebte Widerstand R7 den doppelten Widerstandswert des achten Widerstandes R8 auf.

Durch die Kombination Operationsverstärker mit Widerstand wie z.B. beim vierten Verstärker V4 mit dem vierten Widerstand R4 ergibt sich ein Transimpedanzverstärker. Für hohe Frequenzen kann ein derartiger Verstärker entweder mit diskreten Transistoren oder als integrierte Schaltung realisiert werden. Anstatt Transimpedanz - können auch Hochimpedanz-Verstärker eingesetzt werden. Der bei hohen Frequenzen schwierig zu ralisierende Summierer V5 mit den Widerständen R5 bis R10 kann entfallen, wenn der erste Verstärker V1 mit dem ersten Widerstand R1 und der zweite Verstärker V2 mit dem zweiten Widerstand R2 durch einen ersten Stromspiegel und einen zweiten Stromspiegel ersetzt werden. Dabei wird die Anode der Fotodiode PD1 mit dem Eingang des ersten Stromspiegels verbunden, der den Ausgangsstrom $I_1' = I_1$ liefert. Der Ausgang des ersten Stromspiegels liegt gemeinsam mit der Katode der zweiten Fotodiode PD2 am Eingang des zweiten Stromspiegels, der einen Übertragungsfaktor gleich den Verstärkungsfaktor des Verstärkers V in Fig. 3 aufweist. Der Ausgang des zweiten Stromspiegels ist mit der Katode der dritten Fotodiode PD3 und damit auch mit dem invertierenden Eingang des dritten Verstärkers V3 verbunden. Das Ausgangssignal des dritten Verstärkers V3 ist nun bereits gleichstromfrei.

Die Verwendung eines teilsymmetrischen Dreifach-Faserkopplers in den Anordnungen nach Fig. 1 bis 3 und in Verbindung mit der Anordnung nach Fig. 4 ergibt bei verringerter Ankopplung des dritten Ausgangs in Bezug auf den symmetrischen Dreifach-Faserkoppler einen Gewinn im Signal-Geräuschverhältnis des Datensignals. Die Phasendrehung Ø durch den Dreifach-Faserkoppler weicht von 120° ab; bei Homodynempfang ist eine Phasendrehung Ø kleiner als 120° vorteilhaft, da damit die Amplitude des Datensignals DS vergrößert wird, wie sich dies aus den vorstehend aufgeführten Beziehungen für $I_1$ und $I_2$ ergibt.

Im Ausführungsbeispiel wurden als fotoelektrische Detektoren PIN-Fotodioden verwendet. Alternativ können auch aus Lawinenmultiplikations-Fotodioden eingesetzt werden, deren Multiplikationsfaktor oder interne Verstärkung durch die angelegte äußere Spannung eigestellt werden kann. Damit ist eine besonders einfache Regelung des Fotostroms möglich.

Ein optischer Dreifach-Koppler ist auch in integriert-optischer Ausführung möglich. Hierbei werden in geeignetes Material aus einem III-V-Halbleiter, Lithiumniobat, oder Glas 2 Wellenleiter so dicht nebeneinander vergraben, daß zwischen ihnen eine Verkopplung erfolgt. Anschließend wird ein dritter Wellenleiter in der Mitte über den beiden anderen Wellenleitern entweder auf der Oberfläche des integriert-optischen Bausteins oder auch im Material als vergrabene Struktur hergestellt. Der Abstand zu den beiden anderen Wellenleitern ist ebenfalls so gering, daß Überkopplung auftritt. Vorteilhaft ist insbesondere die Integration mit anderen Bauelementen z.B. Polarisationsdreher, optische Filter, Fotodioden oder Laserdioden auf einem Substrat.

## Ansprüche

1. Optischer Überlagerungsempfänger nach dem Homodynprinzip für PSK-modulierte Lichtsignale mit einem eingangsseitig an eine Empfangslichtquelle und einen lokalen Laser angeschlossenen optischen $90°$ Hybrid, dessen Ausgänge mit optoelektronischen Detektoren verbunden sind,
   **dadurch gekennzeichnet,**
   daß als $90°$ Hybrid ein wenigstens annähernd teilsymmetrischer optischer Dreifach-Koppler (FK) mit drei Eingängen (E, U, X) und drei Ausgängen (A1, A2, A3) vorgesehen ist,
   daß dabei der erste Eingang (E) mit der Empfangslichtquelle und der zweite Eingang (U) mit dem lokalen Laser (LL) verbunden sind, während der dritte Eingang (X) freibleibt,
   daß die Ausgänge (A1, A2, A3) jeweils getrennt mit optoelektronischen Detektoren (PD1, PD2, PD3) verbunden sind und dabei die mit dem ersten und dem zweiten optoelektronischen Detektor (PD1, PD2) verbundenen Ausgänge annähernd gleichmäßig mit den beiden Eingängen (E, U) des Dreifach-Kopplers (FK) für das Empfangslicht und das Licht des lokalen Lasers verkoppelt sind und der mit dem dritten optoelektronischen Detektor (PD3) verbundene Ausgang ein demgegenüber unterschiedliches Koppelverhältnis aufweist,
   daß die optoelektronischen Detektoren (PD1, PD2, PD3) einerseits mit Bezugspotential und andererseits wahlweise direkt oder über Verstärker mit Summierern (S1, S2, S3) in Verbindung stehen und dabei der erste optoelektronische Detektor (PD1) mit dem ersten Eingang eines zweiten Summierers (S2) und über einen Inverter (IN) mit dem ersten Eingang eines ersten Summierers (S1) verbunden ist,
   daß der zweite optoelektronische Detektor (PD2) mit den zweiten Eingängen des ersten und des zweiten Summierers (S1, S2) verbunden ist,
   daß der dritte optoelektronische Detektor (PD3) mit dem ersten Eingang eines dritten Summierers verbunden ist,
   daß der Ausgang des ersten Summierers (S1) wahlweise direkt oder über ein Tiefpaßfilter (TP) mit dem Ausgang für das übertragene Datensignal (DS) verbunden ist,
   daß der Ausgang des zweiten Summierers (S2) über einen Verstärker (V) mit dem zweiten Eingang des dritten Summierers (S3) verbunden ist,

den ist,
daß der Wechselanteil des Ausgangssignals des dritten optoelektronischen Detektors (PS3) und des Datensignal (DS) zueinander wenigstens annähernd orthogonal sind,
daß der Ausgang für das Datensignal (DS) mit einem ersten und der Ausgang des dritten Summierers (S3) mit einem zweiten Eingang eines Multiplizierers (BM) verbunden ist und an dessen Ausgang über ein Schleifenfilter (LF) ein Steuereingang des lokalen Lasers (LL) angeschlossen ist.

2. Optischer Überlagerungsempfänger nach Patentanspruch 1,
   **dadurch gekennzeichnet,**
   daß der Verstärkungsfaktor des Verstärkers (V) der Quotient aus der Lichtleistung am dritten Ausgang (A3) zur Summe der Lichtleistungen an den beiden anderen Ausgängen (A1, A2) des optischen Dreifachkopplers (FK) ist.

## Claims

1. Optical superheterodyne receiver using the homodyne principle for PSK-modulated light signals, having an optical $90°$ sign hybrid, which is connected on the input side to a received light source and a local laser and whose outputs are connected to optoelectronic detectors, characterised in that an optical triple-fibre coupler (FK) which is at least approximately partly symmetrical and has three inputs (E, U, X) and three outputs (A1, A2, A3) is provided as the $90°$ hybrid,
   in that in this arrangement the first input (E) is connected to the received light source and the second input (U) is connected to the local laser (LL), while the third input (X) is unconnected,
   in that the outputs (A1, A2, A3) are each separately connected to optoelectronic detector (PD1, PD2, PD3) and in this arrangement the outputs connected to the first and the second optoelectronic detectors (PD1, PD2) are approximately uniformly coupled to the two inputs (E, U) of the triple-fibre coupler (FK) for the received light and the light of the local laser, and the output connected to the third optoelectronic detector (PD3) has a coupling ratio different therefrom,
   in that the optoelectronic detectors (PD1, PD2, PD3) are connected to a reference potential, on the one hand, and optionally directly, or by amplifiers, to adders (S1, S2, S3), on the other hand, and the first optoelectronic detector (PD1) being connected in this arrangement to the first input of a second adder (S2) and via an inverter (IN) to the first input of a first adder (S1),

in that the second optoelectronic detector (PD2) is connected to the second inputs of the first and of the second adder (S1, S2),

in that the third optoelectronic detector (PD3) is connected to the first input of a third adder,

in that the output of the first adder (S1) is connected optionally directly, or via a low-pass filter (TP) to the output for the transmitted data signal (DS),

in that the output of the second adder (S2) is connected via an amplifier (V) to the second input of a third adder (S3),

in that the alternating component of the output signal of the third optoelectronic detector (PD3) and of the data signal (DS) are approximately orthogonal relative to one another, and

in that the output for the data signal (DS) is connected to a first, and the output of the third adder (S3) is connected to a second input of a multiplier (BM), and a control input of the local laser (LL) is connected to the output of said multiplier via a loop filter (LF).

2. Optical superheterodyne receiver according to Patent Claim 1, characterised in that the gain of the amplifier (V) is the quotient of the light power at the third output (A3) relative to the sum of the light powers at the other two outputs (A1, A2) of the optical triple-fibre coupler (FK).

**Revendications**

1. Récepteur optique superhétérodyne fonctionnant selon le principe homodyne pour des signaux lumineux modulés selon une modulation de phase PSK, comportant un circuit hybride optique à 90°, qui est raccordé, côté entrée, à une source de lumière de réception et à un laser local, et dont les sorties sont raccordées à des détecteurs optoélectroniques,

caractérisé par le fait

qu' il est prévu comme circuit hybride à 90° un coupleur optique triple (FK) au moins approximativement partiellement symétrique et comportant trois entrées (E, U, X) et trois sorties (A1,A2,A3),

que la première entrée (E) est raccordée à la source de lumière de réception et que la seconde entrée (U) est raccordée au laser local (LL), tandis que la troisième entrée (X) reste libre,

que les sorties (A1,A2,A3) sont raccordées respectivement séparément à des détecteurs optoélectroniques (PD1,PD2,PD3) et que les sorties raccordées aux premier et second détecteurs optoélectroniques (PD1,PD2) sont accouplées d'une manière approximativement uniforme aux deux entrées (E,U) du coupleur triple (FK) pour la lumière de réception et la lumière du laser local, et que la sortie raccordée au troisième détecteur optoélectronique (PD3) possède un taux de couplage différent des autres détecteurs,

que les détecteurs optoélectroniques (PD1,PD2,PD3) sont raccordés d'une part au potentiel de référence et d'autre part directement au choix ou par l'intermédiaire d'un amplificateur, à des additionneurs (S1,S2,S3), et le premier détecteur optoélectronique (PD1) est raccordé à la première entrée d'un second additionneur (S2) et, par l'intermédiaire d'un inverseur (IN), à la première entrée d'un premier additionneur (S1),

que le second détecteur optoélectronique (PD2) est raccordé aux secondes entrées des premier et second additionneurs (S1, S2),

que le troisième détecteur optoélectronique (PD3) est raccordé à la première entrée d'un troisième additionneur,

que la sortie du premier additionneur (S1) est raccordée au choix directement par l'intermédiaire d'un filtre passe-bas (TP) à la sortie du signal de données (DS) transmis,

que la sortie du second additionneur (S2) est raccordée par l'intermédiaire d'un amplificateur (V) à la seconde entrée du troisième additionneur (S3),

que la composante alternative du signal de sortie du troisième détecteur optoélectronique (PS3) et la composante alternative du signal de données (DS) sont au moins approximativement orthogonales entre elles,

que la sortie pour le signal de données (DS) est raccordée à une première entrée d'un multiplicateur (BM) et que la sortie du troisième additionneur (S3) est raccordée à la seconde entrée de ce multiplicateur, à la sortie duquel est raccordée, par l'intermédiaire d'un filtre en boucle (LF), une entrée de commande du laser local (LL).

2. Récepteur optique superhétérodyne suivant la revendication 1, caractérisé par le fait que le facteur d'amplification de l'amplificateur (V) est égal au quotient de la puissance lumineuse délivrée sur la troisième sortie (A3) à la somme des puissances lumineuses délivrées sur les deux autres sorties (A1,A2) du coupleur optique triple (FK).

# FIG 1

# FIG 2

# FIG 3

# FIG 4